# EUROPEAN PATENT SPECIFICATION

(11) **EP 2 050 649 B1**
(45) Date of publication and mention of the grant of the patent: **19.05.2010**
(21) Application number: 07118747.0
(22) Date of filing: 18.10.2007
(51) Int. Cl.: B62B 3/06, B62B 5/06, B62B 3/02

(54) **Arrangement at an industrial truck and an industrial truck comprising said arrangement**
Anordnung für ein Flurförderzeug und Flurförderzeug mit dieser Anordnung
Agencement dans un camion industriel et camion industriel doté dudit agencement

(43) Date of publication of application: 22.04.2009
(73) Proprietor: BT Products AB, 595 81 Mjölby (SE)
(72) Inventor: Eriksson, Lars, 590 19 Mantorp (SE)
(74) Representative: Hyltner, Jan-Olof

(56) References cited:
- EP-A- 0 449 029
- EP-A- 0 466 065
- EP-A- 1 172 285
- EP-A- 1 700 767
- EP-A- 1 700 778
- FR-A- 2 822 124
- US-B1- 7 004 272

## Description

### TECHNICAL FIELD

The present invention deals with an arrangement at an industrial truck, fork lifter, such as a tiller truck. More particularly it deals with a tiller truck with a tiller arm that has an adjustable length.

### BACKGROUND ART

Tiller arms for industrial trucks with adjustable length are known in the prior art. One example of this is known in EP 1 700 767 A2, where a tiller arm with an adjustable tiller arm length is disclosed. This tiller arms has a power driven device for changing the length of the said tiller arm. The length control can be actuated in an automated manner depending on the speed of the truck. A manual control of the length is also provided. For example the length, of the tiller arm may be increased as the truck speed increases.

EP 1 700 778 A1 also discloses a tiller arm having adjustable length depending on the angle of the said tiller arm with respect to the industrial truck. Both of these solutions are unsuitable for an industrial truck in which the user can travel on a platform attached to the truck.

The object of the invention is to provide an arrangement which allows a safe and convenient adjustment of the tiller arm length, and which can be used for industrial trucks having a platform.

### SUMMARY OF THE INVENTION

The present invention deals with an arrangement at an industrial truck, comprising a tiller arm for controlling the truck, a user platform on which a user can be positioned when travelling with said truck, said tiller arm being arranged to have a alterable length, and said platform being arranged to have a first and a second position, the first position being a storage position, and the second position being a use position, and that the length of said tiller arm is altered upon change of the position of the platform. The tiller arm length alters automatically when the platform position is changed. This has the effect that the user needs not to alter the length himself. This has also the effect that the user is not given any incentive to use the truck in a manner where the tiller arm length is not optimized for the position of the platform. The above mentioned arrangement has the effect that the length of the tiller arm can be opted for use with and without a user platform. This in turn means that the user does not need to actively decide what length the tiller arm should have, which makes the use of the truck provided with a tiller arm more efficient for the user. The arrangement also provides for a safer operation, as the tiller arm length is not determined by the user.

Alternatively the tiller arm has a first length L and a second length X where L is different from X.

This has the effect that two end stops can be used for maintaining the length L and X. The length L and the length X can of course be of any suitable length and need not be associated with any end stops.

Alternatively the first tiller arm length L is linked to the storage position of said platform. This means that the tiller arm length can also be optimized for walking with the truck. A user walking behind the truck has other parameters which decides what length is optimal, than when travelling with the truck on the mentioned platform. This first length L has many advantages in common with the first condition; in particular, the ergonomics for the user is much improved. Another advantage is that the length is optimized in a way so that the user can walk more freely without risking hitting the truck chassis with his feet.

Alternatively the second tiller arm length X is linked to the use position of said platform. I.e. the tiller arm length X is a function of the usage position of the platform. In this condition the tiller arm has a length that is optimal for a user travelling with the truck while standing on the user platform, i.e. it allows the user to keep an ergonomic position while travelling with the truck, so that the user is less prone to overload of back, arms and shoulders. A user becomes less tired after a working period with an optimized tiller arm length. The truck is also easier to manoeuvre and safer to both the user and other persons operating in the vicinity of the truck.

L is larger than X in the arrangement discussed.

In one embodiment the length of the tiller arm is altered by an electrical power unit.

Thereby the battery of the truck can supply the power needed for the length change of the tiller arm. This also provides for a smooth and reliable altering of the length.

In another embodiment is the length of the tiller arm altered by mechanical means, such as a spring and pulley assembly.

This embodiment has the advantage that it's efficient and reliable. It's also easy to repair and has particularly easy maintenance. It can with advantage be used for situations where the working conditions are extra tough. Another advantage is that no electrical power is consumed by this embodiment. This in turn provides for longer working periods for the truck.

The invention also relates to an industrial truck comprising the arrangement of the embodiments disclosed above.

One specific advantage provided by the invention is that the user does not himself need to worry about or act to alter the length of the tiller arm. Thereby the tiller arm cannot be used with a length position not being opted for the present position of the platform, e.g. a user cannot walk with the truck with a tiller arm having the length X and vice versa for the tiller arm length L, which provides for particular safety and ergonomic handling for a tiller arm with alterable length.

### BRIEF DESCRIPTION OF THE DRAWINGS

Fig. 1 discloses a tiller arm truck and the arrangement that the tiller arm length is altered to length L.
Fig. 2 discloses a tiller arm truck and the arrangement that the tiller arm length is altered to a length X.
Fig. 3 discloses a schematic tiller truck with a wire pulley assembly for altering the length of the tiller arm.

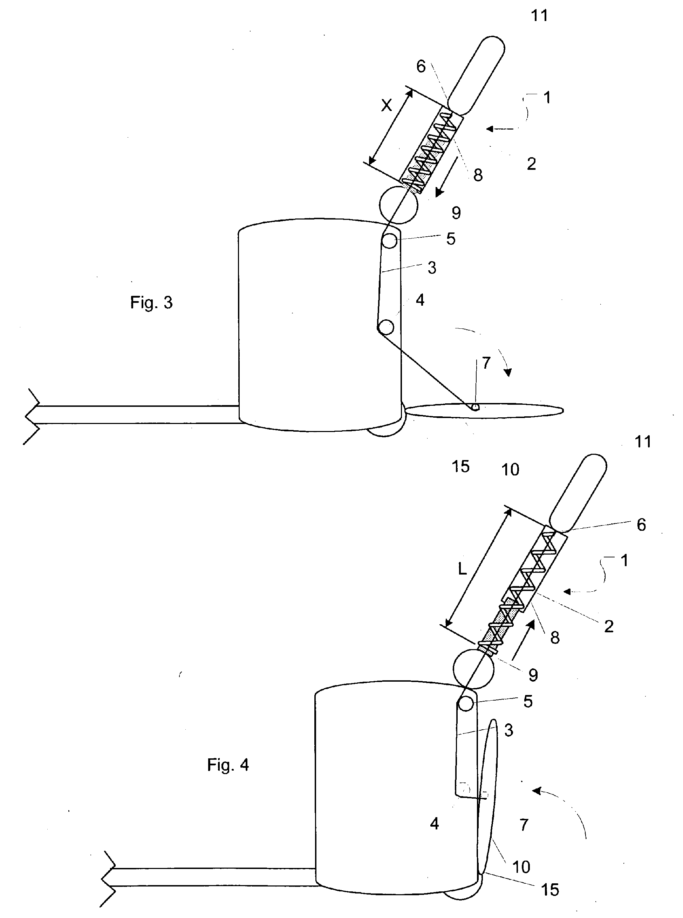

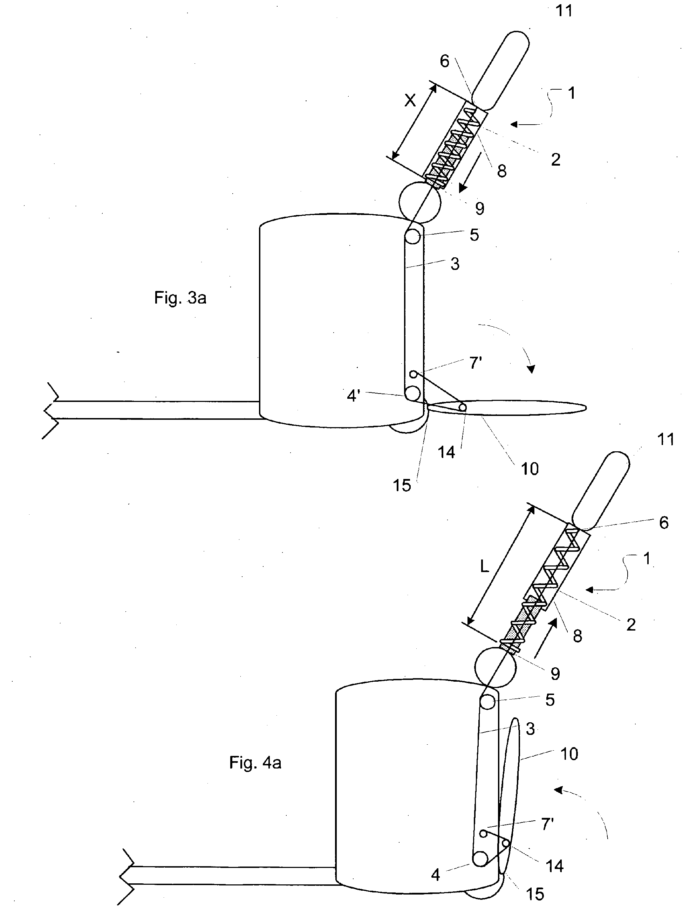

Fig 3 a discloses an alternative embodiment of the embodiment of Fig 3-4
Fig. 4 discloses a schematic tiller truck with a wire pulley assembly for altering the length of the tiller arm.
Fig. 4 a discloses an alternative embodiment of the embodiment of Fig 3-4

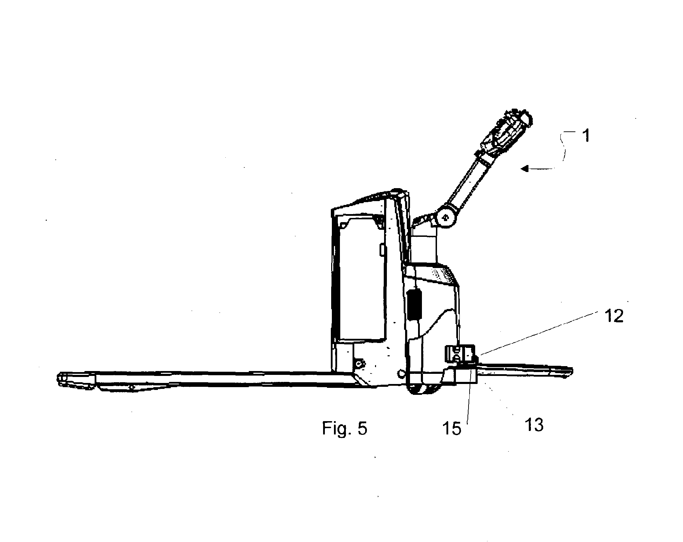

Fig. 5 discloses an embodiment where the tiller arm has a tiller arm that can alter its length based in information from contact breakers.

### DETAILED DESCRIPTION

The choice of the length of a tiller arm for an industrial truck depends in most cases on the design of the truck. The tiller arm should enable safe handling of the truck and should also provide a comfortable arm position for the user. The length of the tiller arm must therefore be chosen with regard to both these aspects. A problem associated with the length of the tiller arm is that depending on whether the user walks behind the tiller truck or if he is riding on a platform of the truck, the length of the tiller arm should preferably be different. Another problem associated with the tiller arm length is the security of the user, a too long tiller arm when riding on the truck is a problem, as is a too short tiller arm when walking behind the truck.

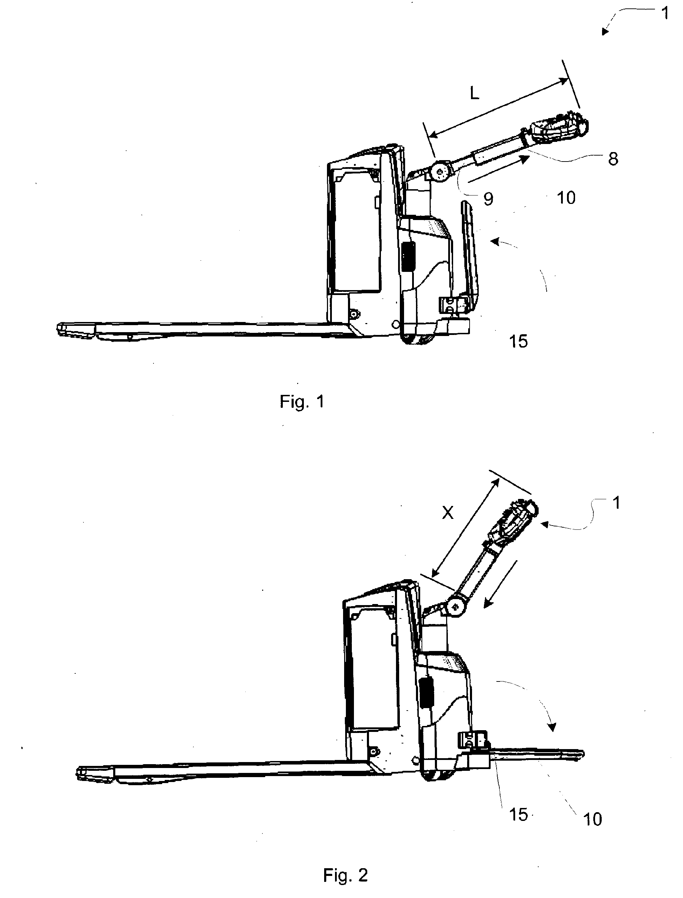

In Fig. 1 discloses a tiller arm truck according to the invention, comprising an arrangement for altering the length of the tiller arm. Further is disclosed a tiller arm 1, and a platform 10. The platform 10 is able to pivot, between a storage position and a user position. The platform is joined to the truck chassis via a hinge joint 15 to the truck, so that it can pivot down from its storage position. In fig 1 the tiller arm 1 is in its storage position. The tiller arm 1 is now in a condition where the length is L, which is ideal for walking behind the truck. The controlling factor for the altering of the tiller arm 1 to length L, is the position of the platform 10. The tiller arm comprises connecting section 9, which is attached to the truck, and an extension section 8 that can move with regard to the connecting section 9 and thereby to the rest of the truck. The section 9 of the tiller arm is pivotally arranged on the tiller arm truck. Section 9 is in this embodiment not movable in its longitudinal direction with regard to the truck. The two sections 8, 9 of the tiller arm 1 are telescopically arranged, so that when section 8 slides with regard to section 9 an alteration of the length of the tiller arm 1 is achieved. At the outer end of the tiller arm a tiller arm handle 11 is provided.

Fig. 2 discloses the embodiment of Fig. 1 but with the difference that the tiller arm length is X. The condition of Fig. 2 is ideal for travelling with the truck on the platform. As the platform 10 is altered from the storage position disclosed in Fig. 1 to the use position shown in Fig. 2, the tiller arm length is automatically altered from L to X. The length difference between L and X is preferably at least 10 cm, more preferably at least 15 cm, and even more preferably at least 20 cm.

Fig. 3 discloses one preferred embodiment where a spring 2 and pulley 4, 5, assembly is used to alter the tiller arm length. A wire 3 extends form the platform to the extension section 8 of the tiller arm. One end of the wire 3 is connected to the platform 10 at connection point 7, and the other end is connected to the extension section 8 of the tiller arm, at connection point 6. The connection points 6, 7 are positioned so that the optimal performance of the altering of the length of the tiller arm is provided for. For example the connection point 7 is preferably positioned on the platform displaced towards the free end of the platform, so that good leverage is provided for. Two pulleys 4, 5, inside the truck chassis, provides for deflection of the wire 3. The tiller arm 1 is provided with an extension spring 2, arranged in or around the connecting section 9. The extension spring provides for a force that acts in a longitudinal direction towards the tiller handle 11.

The function of the embodiment of Fig. 3 and Fig. 4 can be described as follows. When a user steps on the platform 10, the platform 10 is pivoted down. As the user pivots the platform 10, the wire 3 pulls in a direction so that the length of the wire between pulley 5 and fastening point 6 is decreased, and the spring 2 is compressed. At the same time the length of wire between fastening point 7 and pulley 4 is increased. This means that the alteration of the tiller arm length is dependent on the wire 3 and said pulleys 4, 5 of the pivoting movement of said platform 10.

The spring 2 may be arranged so that it can provide for the force needed to pivot the platform form the user position into its resting position, via the wire 3 and pulleys 4, 5, when the platform us not pressed down by the user..

The wire 3 can be of any suitable kind and material, such as steel, plastics, natural materials or any other suitable material.

An alternative embodiment is disclosed in Fig 3a and Fig. 4a. This embodiment has many features in common with the embodiment of Fig 3 and Fig. 4. In this alternative embodiment the wire connection point 7' is not on the platform. The connection point 7' is located in the truck chassis instead. On the platform 10 another pulley 14 is added. This pulley 14 has a location with is dislocated towards the attachment of the platform 10 to the truck. This has the effect that the wire 3 is less disturbing to the user when the platform 10 is in its use position.

In another embodiment a click stop is integrated in the tiller arm 1. This means that when the tiller arm has reached its length L, when the platform is folded up in its resting position, a click stop, i.e. a locking device is actuated. Thereby small movements in the angle of the platform will not cause any changes of the tiller arm length.

In another embodiment, not shown, the tiller arm 1 length is altered by means of an electrical power drive. Contact breakers 12, 13 are actuated by the platform in its resting and usage positions, and transfer signals to a steering unit in the truck that powers the electrical power drive comprised in the tiller arm, so that the length of the tiller arm is altered. Said contact breakers 12, 13 could preferably be disposed as shown in Fig. 5 where a first breaker 12 is actuated when the platform 10 is positioned in its resting position. A second breaker 13 is actuated when the platform 10 is in its usage position. The platform is preferably spring-loaded so that it takes its resting position if no user is placed on the platform. In one embodiment this is performed by using a torsion bar in the hinge joint 15 of the platform. As said above, the length of the tiller arm X 1 is preferably shorter when the platform is in its user position and longer L when it is in its resting position.

One other embodiment not disclosed the spring and pulley assembly of Fig 3-4 and Fig 3a-Fig 4a is operated together with the electric power drive embodiment disclosed above.

Other embodiments of the core idea is meant to be comprised in the scope of the below enclosed patent claims, even though not explicitly disclosed above.

## Claims

1. Arrangement for an industrial truck, comprising a tiller arm (1) for controlling the truck, a user platform (10) on which a user can be positioned when travelling with said truck, said tiller arm (1) being arranged to have an alterable length, and said platform (10) being arranged to have a first and a second position, the first position being a storage position, and the second position being a use position, wherein the length of said tiller arm (1) is arranged to alter upon change of the position of the platform (10), and wherein the tiller arm length is arranged to alter automatically when the platform position is changed.

2. Arrangement for an industrial truck according to claim 1 wherein the tiller arm (1) has a first length L and that said tiller arm (1) has a second length X where L is different from X.

3. Arrangement for an industrial truck according to claim 2 wherein the first tiller arm length L is linked to the storage position of said platform (10).

4. Arrangement for an industrial truck according to claim 2 wherein the second tiller arm length X is linked to the use position of said platform (10).

5. Arrangement for an industrial truck according to any of claims 2-4 wherein L > X.

6. Arrangement for an industrial truck according to any of the claims above wherein the alteration of the length of the tiller arm (1) is actuated by an electrical power unit.

7. Arrangement for an industrial truck according to claim 1-5 wherein the alteration of the length of the tiller arm (1) is actuated by mechanical means, such as a spring and pulley assembly.

8. An industrial truck comprising the arrangement of claim 1-7.

## Patentansprüche

1. Anordnung für ein Flurförderzeug mit einer Deichsel (1) zur Steuerung des Flurförderzeugs, einer Benutzerplattform (10), auf der ein Benutzer positioniert werden kann, wenn er mit dem Flurförderzeug fährt, wobei die Deichsel (1) entsprechend angeordnet ist, um eine veränderbare Länge zu haben, und die Plattform (10) entsprechend angeordnet ist, um eine erste und eine zweite Stellung zu haben, wobei die erste Stellung eine Lagerungsstellung ist und die zweite Stellung ist eine Benutzungsstellung ist, wobei die Länge der Deichsel (1) dafür eingerichtet ist, sich bei Änderung der Stellung der Plattform (10) zu verändern, und wobei die Deichsellänge dafür eingerichtet ist, sich automatisch zu verändern, wenn die Plattformstellung geändert wird.

2. Anordnung für ein Flurförderzeug nach Anspruch 1, wobei die Deichsel (1) eine erste Länge L hat und die Deichsel (1) eine zweite Länge X hat, wobei L sich von X unterscheidet.

3. Anordnung für ein Flurförderzeug nach Anspruch 2, wobei die erste Deichsellänge L mit der Lagerungsstellung der Plattform (10) verbunden ist.

4. Anordnung für ein Flurförderzeug nach Anspruch 2, wobei die zweite Deichsellänge X mit der Benutzungsstellung der Plattform (10) verbunden ist.

5. Anordnung für ein Flurförderzeug nach einem der Ansprüche 2 bis 4, wobei L > X.

6. Anordnung für ein Flurförderzeug nach einem der vorhergehenden Ansprüche, wobei die Veränderung der Länge der Deichsel (1) durch eine elektrische Leistungseinheit betätigt wird.

7. Anordnung für ein Flurförderzeug nach Anspruch 1 bis 5, wobei die Veränderung der Länge der Deichsel (1) durch mechanische Mittel, wie etwa eine Feder-Seilrollen-Anordnung, betätigt wird.

8. Flurförderzeug mit der Anordnung nach Anspruch 1 bis 7.

## Revendications

1. Aménagement pour chariot industriel, comprenant un timon (1) pour commander le chariot, une plateforme d'utilisateur (10) sur laquelle un utilisateur peut être positionné lors d'un déplacement avec ledit chariot, ledit timon (1) étant aménagé pour avoir une longueur modifiable et ladite plateforme (10) étant aménagée pour avoir une première position et une seconde position, la première position étant une position de stockage et la seconde position étant une position d'utilisation, dans lequel la longueur dudit timon (1) est ménagée pour se modifier lors du changement de position de la plate forme (10), et dans lequel la longueur du timon est ménagée pour se modifier automatiquement lors d'un changement de position de la plateforme.

2. Aménagement pour chariot industriel selon la revendication 1, dans lequel le timon (1) a une première longueur L et ledit timon (1) a une seconde longueur X, L étant différent de X.

3. Aménagement pour chariot industriel selon la revendication 2, dans lequel la première longueur L du timon est liée à la position de stockage de ladite plateforme (10).

4. Aménagement pour chariot industriel selon la revendication 2, dans lequel la seconde longueur X du timon est liée à la position d'utilisation de ladite plateforme (10).

5. Aménagement pour chariot industriel selon l'une quelconque des revendications 2 à 4, dans lequel L > X.

6. Aménagement pour chariot industriel selon l'une quelconque des revendications précédentes, dans lequel la modification de la longueur du timon (1) est assurée par une unité d'alimentation électrique.

7. Aménagement pour chariot industriel selon les revendications 1 à 5, dans lequel la modification de la longueur du timon (1) est assurée par des moyens mécaniques, tels qu'un assemblage à ressorts et poulies.

8. Chariot industriel comprenant l'aménagement selon les revendications 1 à 7.
